# EUROPÄISCHE PATENTANMELDUNG

(11) **EP 2 957 413 A1**
(43) Veröffentlichungstag der Anmeldung: **23.12.2015**
(21) Anmeldenummer: 15171561.2
(22) Anmeldetag: 11.06.2015
(51) Int. Cl.: B29C 47/76, C08L 25/06, C08K 3/18, C08K 5/00, C08J 9/12, C08J 9/16

(54) **VERFAHREN ZUR ENTGASUNG VON FLAMMGESCHÜTZTEN, TREIBMITTELHALTIGEN POLYMERGRANULATEN ODER FLAMMGESCHÜTZTEN SCHAUMSTOFFRECYCLATEN**

(30) Priorität: 18.06.2014 EP 14172979
(71) Anmelder: BASF SE, 67056 Ludwigshafen (DE)
(72) Erfinder: Daeschlein, Christian, 68199 Mannheim (DE); Fischer, Horst, 67454 Haßloch (DE); Dietzen, Franz-Josef, 67454 Haßloch (DE); Bellin, Ingo, 68307 Mannheim (DE); Diehlmann, Tim, 67283 Obrigheim-Colgenstein (DE)

(57) **Zusammenfassung**

Ein Verfahren zur Entgasung von flammgeschützten, treibmittelhaltigen Polymergranulaten oder flammgeschützten Schaumstoffrecyclaten durch Aufschmelzen und Extrusion der Polymerschmelze durch eine Entgasungsvorrichtung, wobei den flammgeschützten, treibmittelhaltigen Polymergranulaten oder flammgeschützten Schaumstoffrecyclaten vor dem Aufschmelzen eine Stabilisatormischung, enthaltend
(a) Hydrotalcit als Säurefänger (S1),
(b) gegebenenfalls ein Phosphit als Stabilisator (S2) und
(c) gegebenenfalls ein oder mehrere von (a) und (b) verschiedene Stabilisatoren (S3),
zugegeben wird, sowie Verwendung der nach dem Verfahren entgasten Polymerschmelze oder entgasten Polymergranulate zur Herstellung von flammgeschützten Styrolpolymerschaumstoffen.

## Beschreibung

Die vorliegende Erfindung betrifft ein Verfahren zur Entgasung von flammgeschützten, treibmittelhaltigen Polymergranulaten oder flammgeschützten Schaumstoffrecyclaten durch Aufschmelzen und Extrusion der Polymerschmelze durch eine Entgasungsvorrichtung, sowie die Verwendung der nach dem Verfahren erhältlichen entgasten Polymerschmelze oder entgasten Polymergranulate zur Herstellung von flammgeschützten Styrolpolymerschaumstoffen.

Viele Polymere wie Polyolefine, Polyamide und Polystyrol sind brandgefährdet und müssen daher für viele Anwendungen mit Flammschutzmitteln ausgerüstet werden, um ein zufriedenstellendes Brandverhalten zu zeigen. Eine bei Polymeren häufig eingesetzte Klasse von Flammschutzmitteln sind halogenierte organische Flammschutzmittel.

Problematisch bei der Verwendung der halogenierten organischen Flammschutzverbindungen in Polymeren ist, dass die Polymere in der Regel bei erhöhten Temperaturen mit den Flammschutzmitteln verarbeitet werden, um eine gleichmäßige Verteilung der Flammschutzmittel in der Polymermatrix zu erreichen. Bei den dabei erforderlichen Temperaturen findet häufig schon die Zersetzung eines Teiles der eingesetzten halogenierten Flammschutzmittel statt. Insbesondere bei Extrusionsprozessen erhöht sich die Temperaturbelastung für die thermosensiblen Flammschutzmittel aufgrund der Verweilzeit und durch lokale, scherinduzierte Temperaturspitzen. Die Flammschutzadditive können hierbei abgebaut und die effektiv wirksame Menge im Produkt verringert werden. Zudem wirkt der beim Abbau der Additive entstehende Halogenwasserstoff korrosiv auf die eingesetzten Anlagen. Schließlich führt der beschriebene Abbau häufig zu unerwünschten Verfärbungen im Produkt.

Bei der Herstellung von expandierbarem Polystyrol (EPS) fallen bei Suspensionsprozessen für gewöhnlich unverkäufliche, pentanhaltige Randfraktionen mit z.B. zu kleiner oder zu großer Partikelgröße an. Diese können aus wirtschaftlichen Gründen im Anschluss entgast, kompaktiert und anderen Produkten wie bspw. Extrusionsprodukten als Rohstoff zugegeben werden, bspw. extrudiertem Polystyrolschaumstoff (XPS). Die Entgasung ist notwendig um die vor diesem Schritt hohen Mengen an organischem Treibmittel (anfänglicher Pentangehalt 4 - 7 %; finaler Pentangehalt < 1 %) zu reduzieren und schließlich den weiteren Einsatz der EPS Nebenfraktionen im Extrusionsprozess zu ermöglichen.

Wie sich zeigte, verfärben sich pentanhaltige Granulate enthaltend bromierte polymere Flammschutzmittel (insbesondere SBS-Copolymere) im Entgasungsschritt von zuvor farblos rasch auf dunkelbraun bis schwarz. Dies ist auf einen Zerfall des Flammschutzmittels während des Entgasungsprozesses zurückzuführen. Die braun- bis schwarzen Granulate können im Anschluss nicht mehr im Schaumstoffextrusionsverfahren (XPS-Prozess) verwendet werden. Zudem kann während der Entgasung durch Zerfall/Abbau des Flammschutzmittels HBr entstehen, was hinsichtlich Sicherheit und Gesundheitsschutz kritisch ist. Schließlich ist ein bei der Entgasung abgebautes Flammschutzmittel im Brandfall inaktiv.

Man ist daher dazu übergegangen, die thermische Zersetzung der halogenierten organischen Flammschutzmittel durch Zugabe von thermischen Stabilisatoren zu verhindern oder zumindest zu verringern.

Aus der WO 98/16574 ist die Verwendung von Zeolith A als Wärmestabilisator für halogenierte Flammschutzmittel in Styrolpolymerschaumstoffen bekannt.

Gemäß WO 98/16579 werden Zinkverbindungen wie Zinkstearat in Kombination mit Zeolithen als thermische Stabilisatoren in halogenhaltigen Flammschutzformulierungen eingesetzt.

Nach WO 2012/016906 können als thermische Stabilisatoren für organische halogenierte Flammschutzmittel mit Carbonsäuren teilveresterte Polyole, beispielsweise Glycerinmonstearat, eingesetzt werden.

Die WO 2012/080285 beschreibt die Stabilisierung von aliphatischen, bromhaltigen Polymeren bei der Verarbeitung in Polymerschmelzen bei hohen Temperaturen durch eine Mischung von Alkylphosphiten und Epoxyverbindungen und deren Verwendung in Polystyrolschaumstoffen.

Weiterhin können die bei Zersetzung der halogenierten Flammschutzmittel entstehenden Halogenwasserstoffe durch Säurefänger abgefangen werden, wie dies beispielsweise in der WO 2009/065880 erwähnt wird. Dazu werden beispielsweise Hydroxide des Magnesiums, Aluminiums oder Zinks oder auch Alkalimetallcarbonate oder Alkalimetallhydrogencarbonate verwendet.

Trotz der bereits bekannten thermischen Stabilisatoren für organische halogenierte Flammschutzmittel besteht Bedarf an weiteren thermischen Stabilisatoren, die eine gute Wirksamkeit auf die Stabilität der Flammschutzmittel bei der Verarbeitung der Polymeren zeigen und gleichzeitig die schützende Wirkung der Flammschutzmittel nicht negativ beeinflussen. Insbesondere Stabilisatoren mit guter Wirksamkeit auf die Stabilität der Flammschutzmittel bei der Entgasung der pentanhaltigen EPS-Randfraktionen erfordern weitere Verbesserungen. Die mit halogeniertem Flammschutzmittel und thermischem Stabilisator ausgerüsteten Polymere sollen weiterhin ein gutes Brandverhalten zeigen.

Aufgabe der vorliegenden Erfindung war es, ein Verfahren zur Entgasung von flammgeschützten, treibmittelhaltigen Polymergranulaten durch Aufschmelzen und Extrusion der Polymerschmelze durch eine Entgasungsvorrichtung, bereitzustellen, das die vorgenannten Nachteile nicht aufweist, insbesondere die Freisetzung von Bromwasserstoffen verhindert. Die aus der entgasten Polymerschmelze erhältlichen Granulaten sollten keine oder nur geringste Verfärbung aufweisen.

Demgemäß wurde ein Verfahren zur Entgasung von flammgeschützten, treibmittelhaltigen Polymergranulaten oder flammgeschützten Schaumstoffrecyclaten durch Aufschmelzen und Extrusion der Polymerschmelze durch eine Entgasungsvorrichtung gefunden, wobei den flammgeschützten, treibmittelhaltigen Polymergranulaten oder flammgeschützten Schaumstoffrecyclaten vor dem Aufschmelzen eine Stabilisatormischung, enthaltend
(a) mindestens ein Säurefänger (S1),
(b) gegebenenfalls ein Phosphit als Stabilisator (S2) und
(c) gegebenenfalls ein oder mehrere von (a) und (b) verschiedenen Stabilisatoren (S3), zugegeben wird.

Die Komponenten (a), (b) und (c) der Stabilisatormischung werden vorzugsweise zusammen mit den flammgeschützten, treibmittelhaltigen Polymergranulaten oder flammgeschützten Schaumstoffrecyclaten vorgemischt und in einem Extruder aufgeschmolzen.

Die Polymerschmelze kann nach der Entgasung durch eine Strang- oder Druckunterwassergranulierung zu entgasten Polymergranulaten granuliert werden.

Bevorzugt enthalten die flammgeschützten, treibmittelhaltigen Polymergranulate oder flammgeschützten Schaumstoffrecyclate
(d) mindestens ein thermoplastisches Polymer,
(e) mindestens eine organische Bromverbindung mit einem Bromgehalt im Bereich von 40 bis 90 Gew.-%als Flammschutzmittel (FR),
(f) ein oder mehrerer Flammschutzsynergisten (FS).

Als thermoplastisches Polymer (P) enthalten die flammgeschützten, treibmittelhaltigen Polymergranulate oder flammgeschützten Schaumstoffrecyclaten bevorzugt mindestens ein Styrolpolymer. Geeignete Styrolpolymere sind Homo- oder Copolymere, die einpolymerisierte Einheiten aus vinylaromatischen Monomeren, insbesondere Styrol, enthalten. Beispiele hierfür sind Homopolystyrol (glasklares Polystyrol, GPPS), Schlagzähpolystyrol (HIPS), anionisch polymerisiertes Polystyrol oder Schlagzähpolystyrol (A-IPS), Styrol-a-Methstyrol-copolymere, Acrylnitril-Butadien-Styrolpolymerisate (ABS), Styrol-Acrylnitril-Polymer (SAN) Acrylnitril-Styrol-Acrylester (ASA), Styrolacrylate wie Styrolmethylacrylat (SMA) und Styrolmethylmethacrylat (SMMA), Methyacrylat-Butadien-Styrol (MBS), Methylmethacrylat-Acrylnitril-Butadien-Styrol (MABS)- polymerisate, Styrol-N-Phenylmaleinsäureimid-Copolymere (SPMI) oder Mischungen davon. Die genannten Styrolpolymeren können mit Polyolefinen, wie Polyethylen oder Polypropylen und Polyphenylenether (PPE) abgemischt werden.

Als Flammschutzmittel (FR) werden organische Bromverbindung mit einem Bromgehalt im Bereich von 40 bis 90 Gew.-%, bevorzugt im Bereich von 50 bis 80 Gew.-%, eingesetzt. Insbesondere geeignet sind aliphatische, cycloaliphatische und aromatische Bromverbindungen, wie Hexabromcyclododekan (HBCD), Pentabrommonochlorcyclohexan, Pentabromphenylallylether oderTetrabrombisphenol-A-bis(allylether).

Desweiteren geeignet sind halogenierte Polymere, beispielsweise halogenierte Styrol-ButadienBlockcopolymere. Die halogenierten Polymeren weisen bevorzugt ein mittleres Molekulargewicht im Bereich von 5.000 bis 300.000 g/mol, insbesondere 30.000 - 150.000 g/mol, bestimmt mittels Gelpermeationschromatographie (GPC) auf. Das halogenierte Polymer weist bevorzugt in der thermogravimetrischen Analyse (TGA, gemessen nach DIN 51006 - Thermische Analyse (TA), Thermogravimetrie (TG, Grundlagen) einen Gewichtsverlust von höchstens 5 Gew.-% bis zu einer Temperatur von 220 °C und einer Aufheizrate von 30 K/5 min auf. Bevorzugte halogenierte Polymere sind bromiertes Polystyrol oder Styrol-Butadien-Blockcopolymer mit einem Bromgehalt im Bereich von 40 bis 80 Gew.-%. Besonders bevorzugt werden bromierte Styrol-Butadien-Blockcopolymere, wie in WO 2007/058736 beschrieben.

Geeignete Flammschutzsynergisten (FS) sind thermische Radikalbildner mit Halbwertszeiten von 6 Minuten bei Temperaturen im Bereich von 110 bis 300 °C, bevorzugt 140 bis 230 °C. Besonders bevorzugt werden Dicumyl, Dicumylperoxid, Cumylhydroperoxid, Di-tert.-butyl-peroxid, Tert.-butyl-hydroperoxid oder Mischungen davon, eingesetzt.

Als flammgeschützte Schaumstoffrecyclate können beispielsweise Randabschnitte von Schaumstoffplatten aus dem Schaumstoffextrusionsverfahren (XPS-Verfahren) in zerkleinerter Form eingesetzt werden.

Bevorzugt wird das erfindungsgemäße Verfahren zur Entgasung von flammgeschützten, treibmittelhaltigen Polymergranulaten, welche einen Treibmittelgehalt im Bereich von 4 bis 9 Gew.-% aufweisen, eingesetzt. Das Treibmittel ist in der Regel ein aliphatischer Kohlenwasserstoff mit 3 bis 5 Kohlenstoffatomen, insbesondere Pentan. Besonders bevorzugt wird expandierbares Polystyrol (EPS) eingesetzt.

Durch die Entgasung wird der Treibmittelgehalt des Polymergranulates in der Regel um mindestens 60 Gew.-% erniedrigt.

Das zu entgasende Polymergranulat kann über alle dem Fachmann bekannten EPS-Herstellverfahren produziert werden, insbesondere Suspensionsverfahren.

Das zu entgasende Polymergranulat kann zudem alle gängigen Füllstoffe oder Zusatzstoffe enthalten, insbesondere Graphite, Russe oder Kokse.

Das zu entgasende Polymergranulat kann mittlere Partikelgrößen zwischen 0,2 und 3,0 mm aufweisen. Bevorzugt wird für die erfindungsgemäße Entgasung EPS-Granulat mit d' = 0,2 - 3,0 mm verwendet, ist jedoch nicht auf dieses beschränkt.

Das zu entgasende Polymergranulat kann alle dem Fachmann bekannten Beschichtungsmittel enthalten.

Zur Entgasung werden bevorzugt Extruder oder Plast-Agglomeratoren verwendet. Extruder, die verwendet werden können sind alle dem Fachmann bekannten Extrudertypen wie Einschneckenextruder, gleichlaufende Doppelschneckenextruder, gegenläufige Doppelschneckenextruder sowie Extruder mit mehreren Schnecken wie z.B. Ringextruder oder Planetwalzenextruder.

Bevorzug ist die Verwendung von Einschneckenextrudern oder gleichläufigen Doppelschneckenextrudern. Aufbau und Funktion solcher Extruder sind dem Fachmann bekannt. Plast-Agglomeratoren (wie z.B. von Firma Pallmann) sind in Ihrer Funktion allgemein beschrieben und dem Fachmann in Funktion und Aufbau bekannt.

Als Säurefänger (S1) wird erfindungsgemäß Hydrotalcit eingesetzt. Bevorzugt enthält die Flammschutzmittelmischung Hydrotalcit, Al(OH)₃ oder Mg(OH)₂. Es können natürliche oder synthetische Hydrotalcite eingesetzt werden. Synthetische Hydrotalcite werden häufig auch als Dihydrotalcite (DHT) bezeichnet. Als weitere Säurefänger können beispielsweise Al(OH)₃, Mg(OH)₂, NaHCO₃, KOH oder NaOH zugegeben werden.

Bevorzugt wird als Säurefänger (S1) Hydrotalcit in Mengen von 0,1 bis 2 Gew.-%, besonders bevorzugt in Mengen von 0,2 bis 0,5 Gew.-%, bezogen auf die zur Entgasung eingesetzten flammgeschützten, treibmittelhaltigen Polymergranulate bzw. flammgeschützten Schaumstoffrecyclate, eingesetzt.

Gegebenenfalls enthält die Flammschutzmittelmischung als Stabilisator (S2) mindestens ein Phosphit, bevorzugt ein cyclisches Diphosphit, wie die kommerziell erhältlichen Produkte Bis(2,4-ditert-butylphenyl)-Pentaerytritol-Diphosphit (Irgafos® 126) der BASF oder 2,4-dicumylphenyl)-Pentaerythritol-Diphosphit (Doverphos® S-9228) oder Distearyl-Pentaerythritol-Diphosphit (Doverphos®S682) der Firma Dover Chemical Corporation.

Gegebenenfalls können als Stabilisator (S3) zusätzlich ein oder mehrere von S1 und S2 verschiedene weitere Stabilisatoren (S3) eingesetzt werden.

Gegenstand der Erfindung ist auch die Verwendung der nach dem oben beschriebenen, erfindungsgemäßen Verfahren erhältlichen entgasten Polymerschmelze oder entgasten Polymergranulate zur Herstellung von flammgeschützten Styrolpolymerschaumstoffen.

Zur Herstellung von expandierbaren Styolpolymergranulaten (EPS) können die nach dem erfindungsgemäßen Verfahren erhältliche Polymerschmelze oder Polymergranulate in eine Styrolpolymerschmelze eingemischt, durch eine Düsenplatte extrudiert und in einem Unterwassergranulator unter Druck granuliert werden. Geeignete Verfahrensbedingungen und weitere Additive, wie IR-Absorber, sind beispielsweise in WO 2009/065880 und WO 2011/073141 beschrieben.

Zur Herstellung von Styolpolymerextrusionsschaumstoffen (XPS) können die nach dem erfindungsgemäßen Verfahren erhältliche Polymerschmelze oder Polymergranulate in eine Styrolpolymerschmelze eingemischt und durch eine Schlitzdüse extrudiert werden. Geeignete Verfahrensbedingungen und weitere Additive, wie IR-Absorber, sind beispielsweise in WO 2011/073141 beschrieben.

### Beispiele

### Einsatzstoffe:

EPS Granulat (expandierbare Polystyrolgranulate, d' = 0,30 mm, Pentangehalt ~6,2 %)

Das eingesetzte EPS-Granulat enthielt als Flammschutzmittel ein bromiertes Styrol-Butadien-Diblockcopolymer mit einem Br-Gehalt von ca. 65 Gew.- %, kommerziell erhältlich unter dem Handelsnamen Emerald Innovation® 3000 der Chemtura.

Das eingesetzte EPS-Granulat enthielt weiterhin als Flammschutzsynergist 0,3 % Dicumylperoxid der Fa. Akzo Nobel Polymer Chemicals, erhältlich unter dem Handelsnamen Perkadox® BC-FF.

### Stabilisatoren:

S1: Säurefänger
   Hycite® 713 (Magnesium/Aluminium-Hydrotalcit der BASF SE)
   DHT-4a (Hydrotalcit der Kyowa Chemical Industriy Co.),
   Al(OH)₃ (Nabaltec AG),
   Al₂O₃ (Sigma Aldrich),
   Mg(OH)₂ (Albemerle Co.),
S2: Phosphite
   Doverphos S-9228 (Dover Chemical Corporation),
   Doverphos S-982 (Dover Chemical Corporation),
   Irgafos 126 (BASF SE),
S3: Stabilisatoren
   Zeolith A (Sigma Aldrich),
   Purmol 3ST (Zeochem),
   Glycerinmonostearat (Evonik Goldschmidt),
   Irgastab FS042, Uvinol 4050, Irganox 3114, TiO₂, Irgafos 168, Irganox 1076, Irganox 245, Irganox 3052 (alle BASF SE),
   Talkum (Luzenac Pharma).

### Beispiel 1

Das oben beschriebene EPS-Granulat wurde auf einem Einschneckenextruder zusammen mit zusätzlich 0,2 Gew.-% Hycite, bezogen auf das EPS-Granulat, entgast und kompaktiert. Hierzu wurde das Hycite zusammen mit dem EPS Granulat über den Cold-Feed Einzug des Extruders dosiert. Der Schneckendurchmesser betrug 105 mm, das Verhältnis der Schneckenlänge zum Durchmesser betrug 35. Der Extruder war mit einer Wasserringgranulierung ausgerüstet. Bei einer Drehzahl von 140 rpm und Zylindertemperaturen von 160 °C wurde dem Extruder ein Massestrom von 140 kg/h EPS-Granulat sowie 0,2 Gew.-% Hycite, bezogen auf das EPS-Granulat, zugeführt. Das entgaste Produkt zeigte keine Verfärbung auf und hatte die gleiche Farbe wie das eingesetzte Ausgangsmaterial.

Das so hergestellte, entgaste Material ist für die Verwendung als Recyklat zur Herstellung von expandierbarem Polystyrol oder Polystyrolextrusionsschaumstoff geeignet.

### Beispiel 2

Beispiel 1 wurde wiederholt mit dem Unterschied, dass die zugegebene Menge Hycite 0,125 Gew.-%, bezogen auf EPS-Granulat, betrug. Das entgaste Produkt hatte eine leicht graue Farbe angenommmen.

Das so hergestellte, entgaste Material ist zum Teil für die Verwendung als Recyklat zur Herstellung von expandierbarem Polystyrol oder Polystyrolextrusionsschaumstoff geeignet.

### Vergleichsversuch V1

Beispiel 1 wurde ohne Zugabe von Hycite widerholt. Das entgaste Produkt hatte eine schwarze Farbe angenommen. Das so hergestellte, entgaste Material ist für die Verwendung als Recyklat zur Herstellung von expandierbarem Polystyrol oder Polystyrolextrusionsschaumstoff ungeeignet.

### Beispiele 3 und 4 und Vergleichsversuche V2-V16

Es wurden Extrusionsversuche auf einem DSM-Miniextruder (Model: DSM Research B.V., Micro 15, Zweischneckenextruder) mit verschiedenen Stabilisatoren durchgeführt. Bei Vergleichsversuch V2 wurde kein Stabilisator zugesetzt.

20 g des flammgeschützten EPS-Granulates wurden mit der in Tabelle 1 genannten Menge des entsprechenden Stabilisators / Stabilisatorsystems gemischt und für 15 min zur Homogenisierung extrudiert. Die erhaltene, homogenisierte Schmelze wurde direkt über ein Spritzgussformteil in entsprechende Formkörper der Ausmaße 9 x 5 cm gepresst.

Die Beurteilung der Eignung des Stabilisators / Stabilisatorsystems erfolgte durch die Verfärbung des hergestellten Formkörpers (schwarz / stark verfärbt = ungeeignet, farblos / hell = geeignet). Die Ergebnisse sind in Tabelle 1 zusammengefasst.

**Tabelle 1: Beispiele 3 und 4 und Vergleichsversuche V2-V16**

| Nr. | Gew.-% | Säurefänger S 1 | Gew.-% | Stabilisator S2 bzw. S3 | Beurteilung Farbe [hell, leicht verfärbt, stark verfärbt] | Eignung [Ungeeignet, z.T. geeignet, Geeignet] |
|---|---|---|---|---|---|---|
| Bsp. 3 | 0.20 | DHT | - | - | hell | Geeignet |
| Bsp. 4 | 0.10 | DHT | 0.10 | Irgafos 126 | leicht verfärbt | z.T. geeignet |
| V2 | - | - | - | - | stark verfärbt (völlig schwarz) | Ungeeignet |
| V3 | 0.20 | Al₂O₃ | - | - | stark verfärbt | Ungeeignet |
| V4 | 0.20 | GMS | - | - | stark verfärbt | Ungeeignet |
| V5 | | | 0.20 | Irganox 3114 | stark verfärbt | Ungeeignet |
| V6 | | | 0.20 | Purmol 3ST | stark verfärbt | Ungeeignet |
| V7 | 0.20 | Al(OH)₃ | - | - | stark verfärbt | Ungeeignet |
| V8 | 0.20 | TiO2 | - | - | stark verfärbt | Ungeeignet |
| V9 | | | 0.20 | Irgafos 168 | stark verfärbt | Ungeeignet |
| V10 | | | 0.20 | Irganox 1076 | stark verfärbt | Ungeeignet |
| V11 | | | 0.20 | Irganox245 | stark verfärbt | Ungeeignet |
| V12 | | | 0.20 | Irganox 3052 | stark verfärbt | Ungeeignet |
| V13 | 0.20 | Kaolin | - | - | stark verfärbt | Ungeeignet |
| V14 | 0.20 | Talkum | - | - | stark verfärbt | Ungeeignet |
| V15 | 0.20 | NaHCO3 | - | - | stark verfärbt | Ungeeignet |
| | | | 0.10 | Purmol 3ST | | |
| V16 | | | 0.10 | Irgafos 126 | Mittel bis stark verfärbt | Ungeeignet |

## Patentansprüche

1. Verfahren zur Entgasung von flammgeschützten, treibmittelhaltigen Polymergranulaten oder flammgeschützten Schaumstoffrecyclaten durch Aufschmelzen und Extrusion der Polymerschmelze durch eine Entgasungsvorrichtung, **dadurch gekennzeichnet, dass** den flammgeschützten, treibmittelhaltigen Polymergranulaten oder flammgeschützten Schaumstoffrecyclaten vor dem Aufschmelzen eine Stabilisatormischung, enthaltend
(a) Hydrotalcit als Säurefänger (S1),
(b) gegebenenfalls ein Phosphit als Stabilisator (S2) und
(c) gegebenenfalls ein oder mehrere von (a) und (b) verschiedenen Stabilisatoren (S3),
zugegeben wird.

2. Verfahren nach Anspruch 1, **dadurch gekennzeichnet, dass** die flammgeschützten, treibmittelhaltigen Polymergranulate oder flammgeschützten Schaumstoffrecyclate
(d) ein thermoplastisches Polymer (P),
(e) mindestens eine organische Bromverbindung mit einem Bromgehalt im Bereich von 40 bis 90 Gew.-% als Flammschutzmittel (FR),
(f) ein oder mehrerer Flammschutzsynergisten (FS),
enthalten.

3. Verfahren nach Anspruch 1 oder 2, **dadurch gekennzeichnet, dass** die flammgeschützten, treibmittelhaltigen Polymergranulate oder flammgeschützten Schaumstoffrecyclate als thermoplastisches Polymer ein Styrolpolymer enthalten.

4. Verfahren nach einem der Ansprüche 1 bis 3, **dadurch gekennzeichnet, dass** als Säurefänger (S1) Hydrotalcit in Mengen von 0,1 bis 2 Gew.-%, bezogen auf die eingesetzten, flammgeschützten, treibmittelhaltigen Polymergranulate bzw. flammgeschützten Schaumstoffrecyclate eingesetzt wird.

5. Verfahren nach einem der Ansprüche 1 bis 4, **dadurch gekennzeichnet, dass** als Stabilisator (S2) ein cyclisches Diphosphit eingesetzt wird.

6. Verfahren nach einem der Ansprüche 1 bis 5, **dadurch gekennzeichnet, dass** die Polymergranulate als Flammschutzsynergist (FS) Dicumyl enthalten.

7. Verfahren nach einem der Ansprüche 1 bis 6, **dadurch gekennzeichnet, dass** die Polymerschmelze nach der Entgasung durch eine Strang- oder Druckunterwassergranulierung zu entgasten Polymergranulaten granuliert werden.

8. Verwendung der nach den Verfahren gemäß einem der Ansprüche 1 bis 6 entgasten Polymerschmelze oder gemäß Anspruch 7 entgasten Polymergranulate zur Herstellung von flammgeschützten Styrolpolymerschaumstoffen.

9. Verfahren zur Herstellung von expandierbaren Styrolpolymergranulaten, **dadurch gekennzeichnet, dass** man die nach dem Verfahren gemäß einem der Ansprüche 1 bis 6 entgaste Polymerschmelze, mit 1 bis 10 Gew.-% Treibmittel, bezogen auf die Polymerschmelze, versetzt und die treibmittelhaltige Polymerschmelze , durch eine Düsenplatte extrudiert und in einem Unterwassergranulator unter Druck granuliert.

10. Verfahren zur Herstellung von Stryolpolymerextrusionsschaumstoffen, **dadurch gekennzeichnet, dass** man die nach dem Verfahren gemäß einem der Ansprüche 1 bis 6 entgaste Polymerschmelze, mit 1 bis 10 Gew.-% Treibmittel, bezogen auf die Polymerschmelze, versetzt und die treibmittelhaltige Polymerschmelze durch eine Schlitzdüse extrudiert.
